# EUROPÄISCHE PATENTSCHRIFT

(11) **EP 1 195 722 B1**
(45) Veröffentlichungstag und Bekanntmachung des Hinweises auf die Patenterteilung: **28.07.2004**
(21) Anmeldenummer: 01120735.4
(22) Anmeldetag: 06.09.2001
(51) Int. Cl.: G07C 5/08, B60K 37/00

(54) **Verfahren zur Anzeige von Ereignissen in einem Kraftfahrzeug**
Method of displaying conditions in a motor vehicle
Procédé pour afficher des conditions dans un véhicule automobile

(30) Priorität: 21.09.2000 DE 10046905
(43) Veröffentlichungstag der Anmeldung: 10.04.2002
(73) Patentinhaber: MAN Nutzfahrzeuge Aktiengesellschaft, 80995 München (DE)
(72) Erfinder: Spaderna, Josef, Dipl.-Ing., 85229 Markt Indersdorf (DE); Eigner, Werner, 86156 Augsburg (DE); Girst, Hans-Werner, 86153 Augsburg (DE)

(56) Entgegenhaltungen:
- EP-A- 0 122 043
- US-A- 4 196 413

## Beschreibung

In den Patentansprüchen und in der Beschreibung ist das Wort "aufzeigbar" verwendet, das dem Sinne nach das Erscheinen einer Darstellung in einem Display meint.

Die Erfindung betrifft ein Verfahren nach dem Oberbegriff des Anspruches 1.

Eine Vorrichtung dieser Art ist aus der DE 41 40 864 A1 bekannt. Mit dieser Vorrichtung erfolgt eine multifunktionelle Anzeige von Diagnosesignalen in Form einer Punktmatrix, in der im Normalfall eine Zeitmesseinheit angezeigt wird. Ein elektronisches Modul nimmt eine oder mehrere Information(en) bzw. Störung(en) auf und steuert die Anzeigeeinrichtung so, dass eine entsprechende Störungsinformation anstelle der Zeitdaten sichtbar wird. Die Störungsinformationen werden durch Symbole angezeigt, wobei, abhängig von der Wertigkeit der Symbole, die Reihenfolge festgelegt ist. Mit Hilfe eines Schalters kann der Fahrer alle Symbole nacheinander sichtbar machen.

Für den Fall, dass nicht viele Symbole, z. B. fünf Symbole speicherbar sind, ist dies eine gangbare Lösung.

Aus der EP 0 872 993 A1 ist eine Anordnung zur Bedienerführung in Kommunikationsanlagen bekannt, die mit Displays für alphanumerische oder grafikfähige Anzeigen ausgestattet sind. Als Steuermittel ist ein Rollelement mit Tastfunktion und einer separaten Aktivierungstaste verwendet und wahlweise dem Display zeilenweise Aktivierungselemente zugeordnet sind.

Die genannte Anordnung ist für ein Fahrzeug nicht geeignet, weil ein Tastmittel und das Lesen von Zeilen im herkömmlichen Sinne den Fahrzeugführer zu viel ablenken würde, insbesondere bei einem Nutzfahrzeug, wie einem Lkw, bei dem es viele Bedienteile gibt.

Aufgabe der Erfindung ist es, den Fahrzeugführer, insbesondere den eines Nutzfahrzeuges wie Lkw oder Omnibus, automatisch und übersichtlich über Ereignisse (events) seines Fahrzeuges zu unterrichten bzw. zu informieren.

Die Aufgabe wird erfindungsgemäß durch die Merkmale des Anspruches 1 gelöst. Dadurch, dass eine Zeile mit beispielsweise fünf Symbolen im Bereich 4 aufzeigbar ist und im Hintergrund und nicht sichtbar in einer Anzeigesteuerung beispielsweise zwei weitere Zeilen mit Symbolen in Warteposition bringbar sind, die in einem zeitlichen Abstand voneinander automatisch aufzeigbar sind, ist der Fahrzeugführer über die events des Fahrzeuges bestens informiert und kann, daraus resultierend, auf den aktuellen Fahrzeugzustand schließen.

Weiterhin ist eine Zeile im Bereich 2 vorhanden, in der ein Symbol und ein Hinweis und/oder eine Handlungsempfehlung aufzeigbar ist und in einer Anzeigesteuerung hierfür eine Vielzahl von Symbolen mit je einem Hinweis und/oder einer Handlungsempfehlung gespeichert sind und automatisch, ohne Zutun des Fahrzeugführers, bei jeweils einem event aufzeigbar ist, durch die der Fahrzeugführer unmissverständlich auf ein event oder mehrere events in seinem Fahrzeug hingewiesen wird.

Im folgenden ist auf Lastkraftwagen eingegangen, da durch ihren unterschiedlichen Einsatz auch viele Symbole aufzeigbar sein müssen.

Vorteile des erfindungsgemäßen Verfahrens ist eine übersichtliche und ausführliche Information des Fahrzeugführers, ohne dass dieser durch Drücken von Knöpfen oder/und größerer Lesearbeit von seiner Pflicht für ein sorgfältiges, umsichtiges Fahren abgelenkt wird.

Zusätzlich sind die Symbole im Normalfall in schwarz auf grauem Untergrund aufgezeigt bzw. es kann vom Fahrer eine andere Farbgebung eingestellt werden, z. B. farbinvers, wenn Stand- oder Fahrlicht eingeschaltet ist, was ein ruhiges Bild vermittelt und somit den Fahrer auch nicht stört.

Weiterhin ist aus den genannten Gründen der Bereich 4 im Wechsel von Zeilen abgestimmt auf die Zeile im Bereich 2 und umgekehrt, damit ein ruhiger Gesamteindruck in der Anzeige auftritt.

Beispielsweise "wartet" die Symbolzeile im Bereich 4, wenn im Bereich 2 ein event auftritt. Der Bereich 2 hat in dem beschriebenen Beispiel eine längere Rollierzeit, weil in dieser Zeile ein Symbol und ein Hinweis, eine Handlungsempfehlung für den Fahrer gut erfassbar sein muss. Erst dann, wenn die längere Rollierzeit der Zeile im Bereich 2 abgelaufen ist, erfolgt gleichzeitig mit der Zeile im Bereich 4 der Zeilenwechsel.

Da eine Beschreibung der Vorgänge des erfindungsgemäßen Verfahrens vorteilhafterweise in Verbindung mit der Zeichnung durchführbar ist, wird im folgenden mit Hilfe der Zeichnung beschrieben.

Die Zeichnung zeigt schematisch und beispielhaft eine Ausführung der Erfindung.

Es zeigen:
- Fig. 1: eine Auswahl von Symbolen,
- Fig. 2: die Anordnung im Display,
- Fig. 3: die Anordnung im Armaturenbrett,
- Fig. 4: ein Hinzufügen von Symbolen,
- Fig. 5: eine Zeile im Hintergrund,
- Fig. 6: ein Aufzeigen von Symbolen,
- Fig. 7: ein Wegnehmen von Symbolen,
- Fig. 8: weggenommene Symbole nach einer Rollierzeit,
- Fig. 9: ein Zusammenfassen von Symbolen,
- Fig. 10: eine Zeile mit zusammengefassten Symbolen,
- Fig. 11: zeitliche Abstimmung der Bereiche 4 und 2,
- Fig. 12: zeitliche Abstimmung der Bereiche 4 und 2.

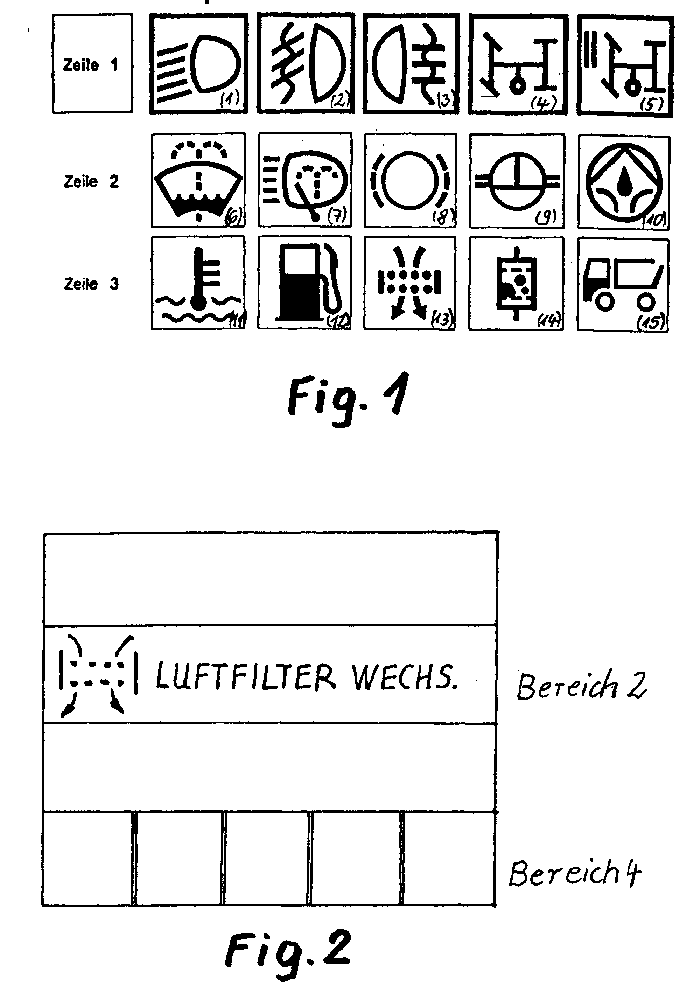

Die Fig. 1 zeigt eine Auswahl von Symbolen, die, wenn events für nahezu alle Symbole vorliegen, zeilenweise in einer Rollierzeit gezeigt werden. Die Zeile 1 ist in dieser Fig. aufgezeigt, während die Zeilen 2 und 3 im Hintergrund in der Anzeigesteuerung in Warteposition sind. Jede Zeile hat hier beispielhaft fünf Symbole, die, je nach event, aufzeigbar sind.

Bedeutung der ausgewählten Symbole:

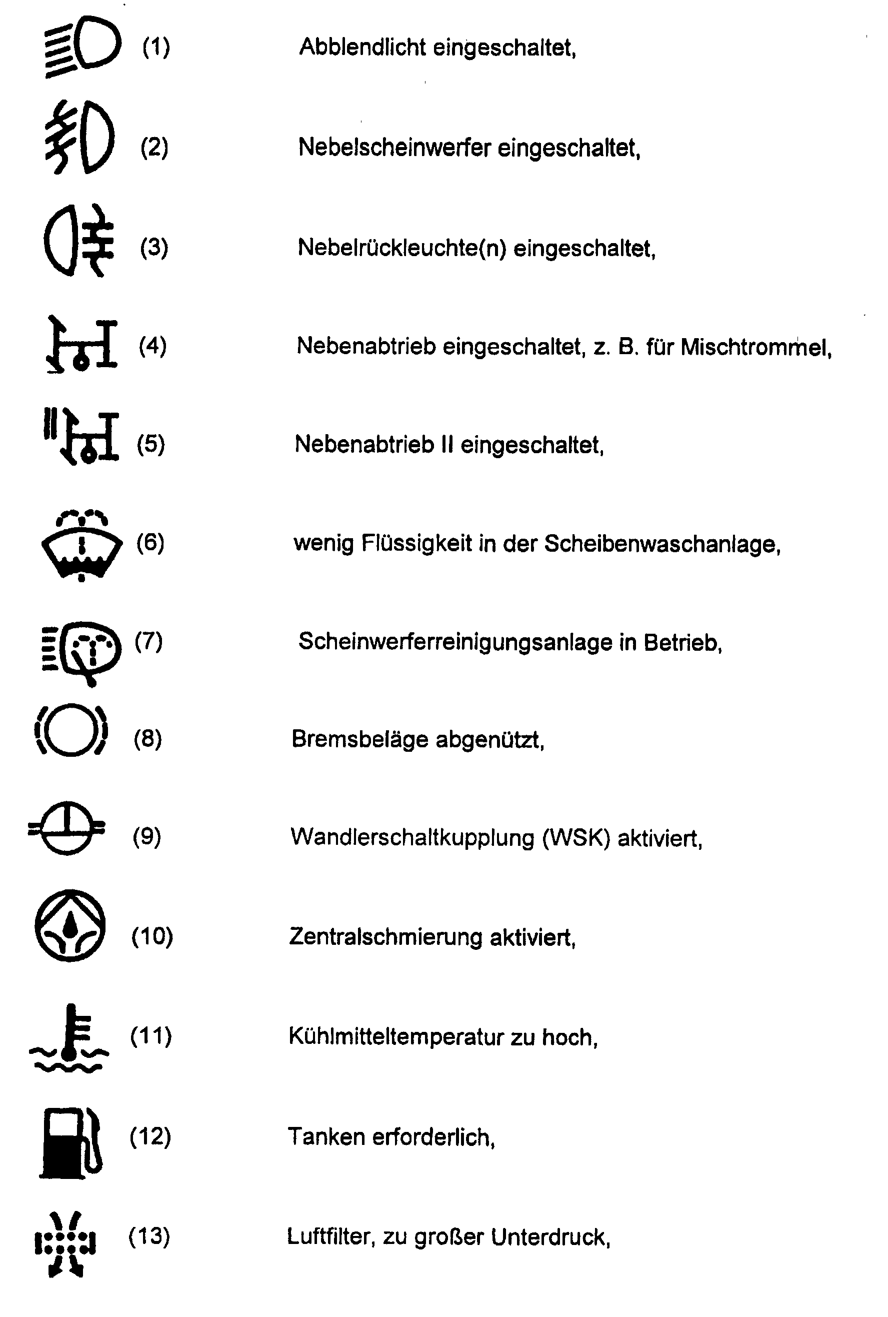

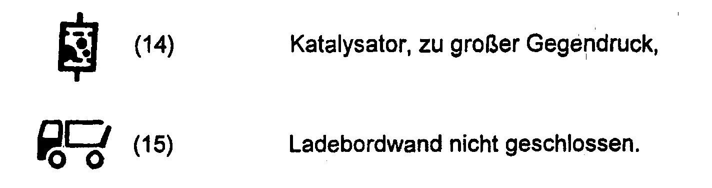

Die bildliche Darstellung ist beispielsweise heller Untergrund und schwarzes Symbol bei nicht eingeschalteter Fahrzeugbeleuchtung und dunkler Untergrund und helles Symbol bei eingeschalteter Fahrzeugbeleuchtung. Diese Einstellung kann durch den Fahrer auch umgestellt werden.

Im Display 31 ist für die Symbole keine Umrandung und keine Zeilenangabe vorgesehen, beide Kennzeichnungen dienen nur einer verständlichen Beschreibung.
Fett umrandete Symbole = aufgezeigt
Dünn umrandete Symbole = im Hintergrund wartend.

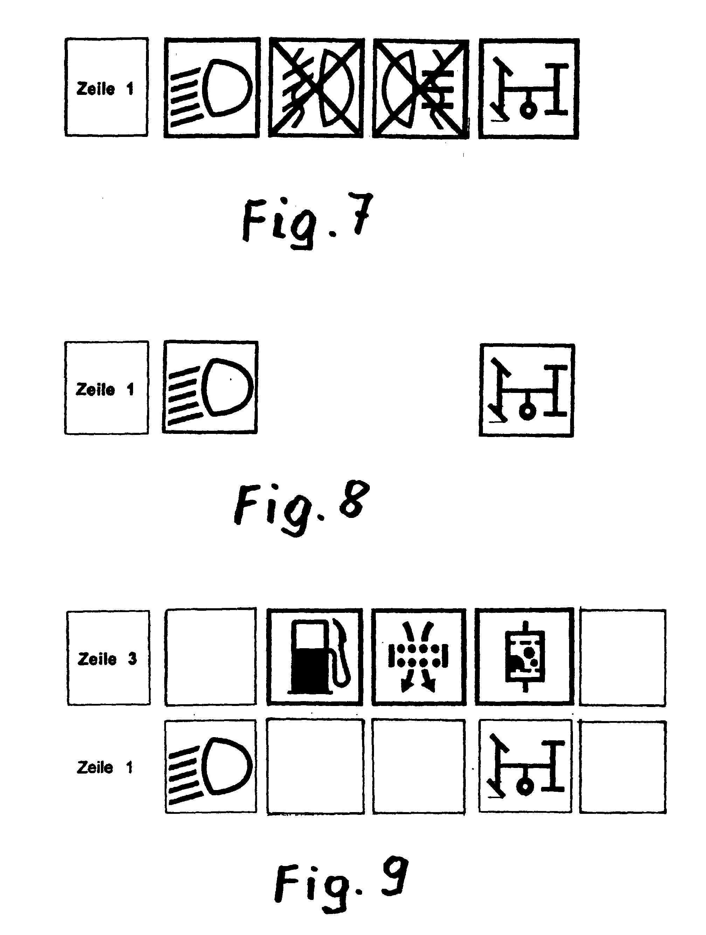

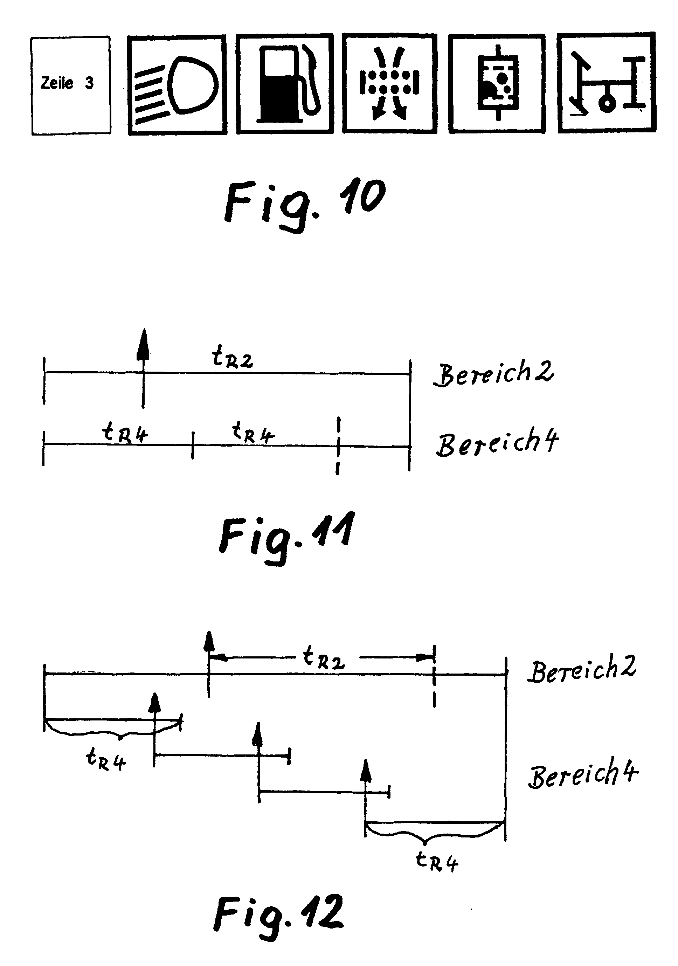

Die Fig. 2 zeigt die Anordnung im Display. Im Bereich 4 sind die Symbole, beispielsweise nach Fig. 1 aufzeigbar und, falls mehr als eine Zeile durch events mit Symbolen belegt ist, die Zeilen im zeitlichen Abstand (Rollieren) aufzeigbar. Der Bereich 2 ist eine weitere Zeile, in der ein Symbol und ein Hinweis oder/und eine Handlungsempfehlung in schriftlicher Form aufzeigbar ist. In dem dafür zuständigen Rechner, der auch für den Bereich 4 zuständig sein kann, Anzeigesteuerung genannt, ist für den Bereich 2 eine Vielzahl von Symbolen mit zugeordneten Hinweisen und/oder Handlungsempfehlungen gespeichert, die, wenn ein event vorliegt, das entsprechende Symbol mit Hinweis sofort aufzeigt. Wenn mehr als ein event vorliegt, werden die entsprechenden Symbole mit Hinweis und/oder Handlungsempfehlung ebenfalls im Rollieren aufgezeigt.
Die Rollierzeit der Symbolzeile im Bereich 4 ist vorzugsweise kürzer, als die der Zeile mit Symbol und Hinweis/Handlungsempfehlung im Bereich 2, da beispielsweise die Schriftform vom Fahrzeugführer aufnehmbar sein muss. Die Abstimmung der beiden Zeiten zueinander beim Rollieren ist in den Figuren 9 und 10 dargestellt und im Text beschrieben.

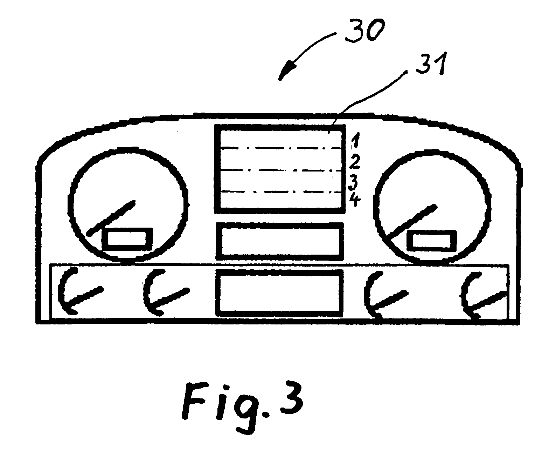

Die Fig. 3 zeigt die Anordnung des Displays 31 im Armaturenbrett 30. Das Display 31 hat die Bereiche 1, 2, 3, 4 und ist zentral im Sichtbereich des Fahrers im Armaturenbrett angeordnet.

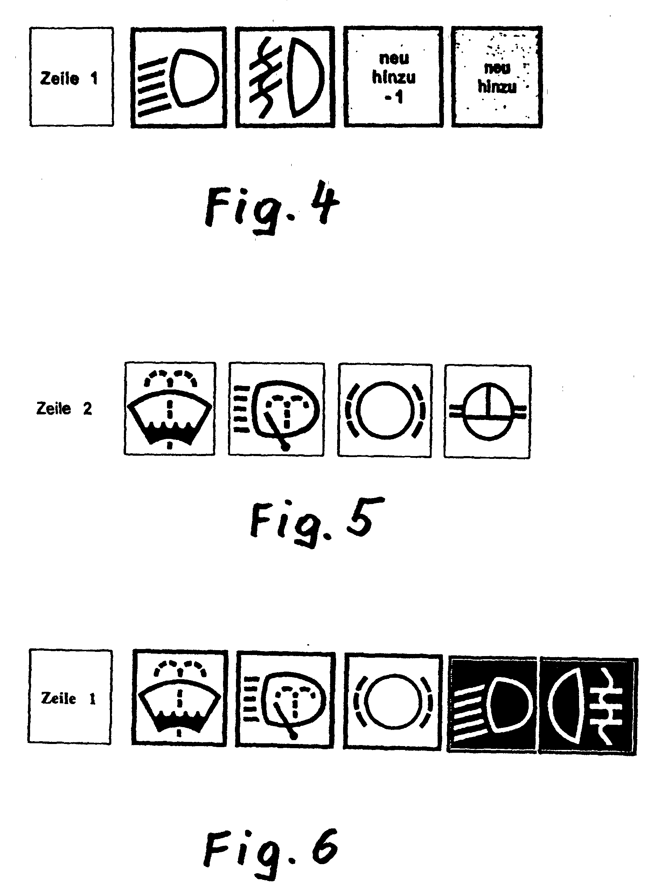

Die Fig. 4 zeigt die aufgezeigte Zeile 1, die mit den Symbolen für Abblendlicht und Nebelscheinwerfer eingeschaltet belegt ist. Die neu hinzukommenden Symbole "neu hinzu-1" und "neu hinzu" werden angereiht. Die Anordnung kann solange erfolgen, bis die Zeile aufgefüllt ist. Die Zählung der Rollierzeit beginnt von neuem, wenn ein Symbol neu erscheint oder gelöscht wird.

Die Fig. 5 zeigt die Zeile 2, die nicht sichtbar ist. Wenn die aufgezeigte Zeile 1 mit Symbolen, im Beispiel fünf Symbole pro Zeile, belegt ist, sind in die nicht sichtbare Zeile 2 weitere Symbole vormerkbar. Wenn eine Eintragung in der im Hintergrund wartenden Zeile erfolgen soll, wird diese Zeile sofort aufgezeigt, wobei die Eintragung beim Aufzeigen bereits erfolgt ist. Zur Kenntlichmachung der Eintragung erscheint die Eintragung z. B. farbinvers, Beschreibung Fig. 6.

Die Fig. 6 zeigt eine aufgezeigte Zeile, in der die als event "Nebelschlußleuchte(n) eingeschaltet" und "Tanken erforderlich" eingetragen wurde.
Die neu aufgezeigten Symbole erscheinen farbinvers, also die Symbole selbst hell für eine Aufblendmarkierungszeit, die gleich oder kleiner der Rollierzeit für diesen Bereich ist. Nach Ablauf dieser Markierungszeit erscheinen diese Symbole in Normalfarbgebung. Zur Kenntlichmachung eines neu aufgezeigten Symbols kann das Bild (Symbol und Untergrund) auch in einer anderen, als der standardmäßigen Farbgebung oder/und der Bilduntergrund in einem veränderten Muster dargestellt sein.

Die Fig. 7 zeigt die aufgezeigte Zeile 1 in der zwei Symbole, die Nebelscheinwerfer und die Nebelschlussleuchte(n), die aus der Anzeige entfernt werden müssen, weil die genannten Beleuchtungskörper abgeschaltet wurden. Die Symbole werden beispielsweise durchgestrichen, bleiben aber noch eine Markierungszeit sichtbar im Display. Wenn die Zeilen rollieren, beginnt die Zeitzählung für das Rollieren im Moment des Durchstreichens von neuem. Wenn nur eine Zeile, also die aufgezeigte Zeile mit Symbolen belegt ist und kein Rollieren erfolgt, bleiben die durchgestrichenen Symbole eine Markierungszeit noch aufgezeigt. Die Markierungszeit ist gleich oder kann auch kleiner als die Rollierzeit sein.

Die Fig. 8 zeigt, wie sich die aufgezeigte Zeile, Fig. 7, nach einem Rollierzyklus, wenn diese Zeile wieder erscheint, oder nach einer Rollierzeit, wenn nur eine Zeile aufgezeigt ist, erscheint. An der (den) Stellen, an der (denen) gelöscht wurde, erscheint bzw. erscheinen eine bzw. mehrere Lücken. Wenn kein event vorliegt und die Zeile nicht mit einer anderen Zeile gefüllt bzw. aufgefüllt wird, werden nach Ablauf der Rollierzeit die Symbole linksbündig aufgeschlossen (ist nicht dargestellt).

Die Fig. 9 zeigt die Zeile 3 mit zwei Symbolzeilen "Lücke", weil die Symbole vorher durch z. B. Durchstreichen gelöscht wurden.

In der nächsten im Hintergrund wartenden Symbolzeile 1 sind drei Symbolstellen "Lücke". Die im Hintergrund wartende Symbolzeile 1 ist demnach mit den Symbolen der aufgezeigten Zeile 3 auffüllbar. Die aufgezeigte Zeile 3 bleibt eine Rollierzeit, wenn kein event erfolgt, aufgezeigt. Die Umrandung an den Stellen ohne Symbol ist beispielhaft so dargestellt, um in dieser Zeichnung die Leerstellen besser erkennbar zu machen, was im Display nicht so sein muss.

Die Fig. 10 zeigt die aufgefüllte Zeile 3, nachdem diese mindestens eine Rollierzeit mit zwei Lücken aufgezeigt (Fig. 9) war. Die Zeile 3, Fig. 9, hat die größere Anzahl von Symbolen gegenüber der nächsten im Hintergrund wartenden Symbolzeile, Fig. 9.

Die Bedingungen für das Auffüllen
- dass die Zeile mit mehr Symbolen mit der Zeile mit weniger Symbolen gefüllt wird (Anspruch 10),
- dass von der nächsten im Hintergrund wartenden Symbolzeile die Vormerkung einer Zusammenfassung ausgeht (Anspruch 8),
- dass die Lücken (Zeile 3, Fig. 9) mindestens eine Rollierzeit aufgezeigt waren (Anspruch 9)
sind demnach erfüllt und das Auffüllen kann erfolgen.

Das Auffüllen geht nach folgendem Prinzip:
- das Auffüllen bzw. Aneinanderreihen von Symbolen ist spaltenorientiert (Anspruch 11),
- an der aufzufüllenden Zeile soll möglichst wenig geändert werden.

Dadurch wird das Symbol Scheinwerfer eingeschaltet in Spalte 1 der Zeile 3 eingeordnet, weil dieses Symbol der Spalte 1, wie aus Fig. 1 ersichtlich, zugeordnet ist. Die Symbole "Tanken erforderlich", "Luftfilter zu großer Unterdruck" und "Katalysator zu hoher Gegendruck", bleiben an ihren Stellen, weil sie in diese Spalten eingeordnet sind, Fig. 1. Das Symbol Nebenabtrieb eingeschaltet wird angereiht, weil der ihm zugeteilte Platz, Fig. 1, belegt ist und an der aufzufüllenden Zeile möglichst wenig verändert werden soll.

Die Fig. 11 zeigt das Verhalten der Aufzeigezeit der Symbolzeile, Bereich 4, wenn in der Symbolzeile mit Hinweis/Handlungsempfehlung, Bereich 2, ein event vorliegt. Die Zeile im Bereich 2 hat vorzugsweise eine längere Rollierzeit als die Symbolzeile im Bereich 4, weil im Beispiel für den Fahrzeugführer ein Symbol mit Hinweis bzw. Handlungsempfehlung, Bereich 2, länger sichtbar sein soll. Damit aber ein möglichst ruhiger Gesamteindruck der Anzeigen im Display gegeben ist, sollten diese Anzeigen aufeinander abgestimmt sein. Wenn nun im Bereich 2 ein event, senkrechter Pfeil für den Beginn, auftritt und die Rollierzeit t_{R4} im Bereich 4 noch nicht beendet ist, wird die Rollierzeit im Bereich 4 zu einer Aufzeigezeit soweit verlängert, bis die Rollierzeit im Bereich 2 abgelaufen ist und dann ein gemeinsamer Wechsel der Zeile im Bereich 2 und im Bereich 4 erfolgt. Durch diese Maßnahme wird ein ruhiger Eindruck vermittelt und der Fahrzeugführer nicht unnötig von seiner Hauptaufgabe, dem Führen des Kraftfahrzeuges abgelenkt.

Die Fig. 12 zeigt das Verhalten der Symbolzeile mit Hinweis bzw. Handlungsempfehlung im Bereich 2, wenn in der Symbolzeile, Bereich 4, durch mehrere, hintereinander folgende events, angedeutet mit jeweils einem senkrechten Pfeil, nicht eingehalten wird. Die Zeile im Bereich 2 bleibt solange aufgezeigt, bis nach dem letzten event in der Symbolzeile im Bereich 4 die Rollierzeit t_{R4} abgelaufen ist und dann der Wechsel beider Zeilen gleichzeitig erfolgt.

Die genannten Rollierzeiten sind hier beispielhaft im zeitlichen Verhalten dargestellt. Es ist aber auch denkbar, dass die Rollierzeiten im Bereich 4 und Bereich 2 gleich lang sind oder sogar umgekehrt lang, also die Rollierzeit im Bereich 4 länger als im Bereich 2 ist. Das Verhalten des gleichzeitigen Wechsels der genannten Zeilen soll dabei erhalten bleiben.

Wenn im Bereich 4 maximal nur eine Zeile belegt und aufgezeigt ist und im Bereich 2 nur ein Symbol mit Hinweis oder Handlungsempfehlung aufgezeigt werden muss, bleiben beide Bereiche 4 und 2 unverändert aufgezeigt.

Wenn im Bereich 4 nur eine Zeile belegt ist, im Bereich 2 jedoch mehrere events vorliegen, bleibt der Bereich 4 unverändert aufgezeigt, während im Bereich 2 rolliert wird. Dies gilt natürlich auch umgekehrt.

## Patentansprüche

1. Verfahren zur Anzeige von Ereignissen in einem Kraftfahrzeug mittels Symbolen in einem abgegrenzten Platz eines Displays mit größerer Anzahl der möglichen Symbole als die vorhandenen Stellen im abgegrenzten Platz des Displays, bei dem in einer ersten Zeile eine sichtbare Anzeige von mehreren Symbolen vorgesehen wird und im Hintergrund, in einem Rechner und im abgegrenzten Platz im Display nicht sichtbar weitere erste Zeilen von Symbolen in Warteposition bringbar sind, die in einem zeitlichen Abstand voneinander innerhalb einer Rollierzeit in der ersten Zeile automatisch aufzeigbar sind und in einer zweiten Zeile im Display ein Symbol und ein Hinweis in Schriftform automatisch aufgezeigt werden, wobei eine Vielzahl von Symbolen und den dazugehörigen Hinweisen vorgesehen und ebenfalls im Hintergrund gespeichert werden und im Falle eines Ereignisses oder von mehreren Ereignissen ein Symbol mit einem Hinweis sofort aufgezeigt wird und in einer Rollierzeit jeweils ein weiteres Symbol mit Hinweis in Schriftform aufgezeigt wird und wobei die Aufzeigezeiten der beiden Zeilen aufeinander abgestimmt sind.

2. Verfahren nach Anspruch 1,
**dadurch gekennzeichnet, dass**, wenn die erste Zeile in ihren Stellen nicht voll mit aufgezeigten Symbolen belegt ist, ein neu hinzukommendes Symbol oder mehrere neu hinzukommende Symbole angereiht wird oder werden, soweit in der sichtbaren Zeile noch Platz ist.

3. Verfahren nach den Ansprüchen 1 und 2,
**dadurch gekennzeichnet, dass**, wenn in der ersten Zeile ein Symbol oder mehrere Symbole aufgezeigt werden muss oder müssen und die erste Zeile belegt ist, die nächstwartende Zeile im Hintergrund sichtbar in den Vordergrund gestellt wird und gleichzeitig von links beginnend ein Symbol oder mehrere Symbole aufgezeigt werden, oder, wenn mindestens ein Symbol eingetragen ist, weitere, zum Aufzeigen anstehende Symbole angereiht und aufgezeigt werden.

4. Verfahren nach einem der vorhergehenden Ansprüche,
**dadurch gekennzeichnet, dass** die Zählung der Rollierzeit der ersten Zeile von neuem beginnt, wenn ein Symbol neu erscheint oder gelöscht wird.

5. Verfahren nach einem der vorhergehenden Ansprüche,
**dadurch gekennzeichnet, dass** bei der Einblendung eines Symbols das Symbol zunächst farbinvers oder der Bilduntergrund und/oder das Symbol in einer anderen Farbe als der standardmäßigen Farbgebung erscheint und/oder das Symbol und/oder der Bildhintergrund mit einem veränderten Muster dargestellt wird.

6. Verfahren nach einem der vorhergehenden Ansprüche,
**dadurch gekennzeichnet, dass**, wenn ein Symbol gelöscht wird, eine Löschungsmarkierung an diesem Symbol aufgezeigt wird.

7. Verfahren nach einem der vorhergehenden Ansprüche,
**dadurch gekennzeichnet, dass** bei der Rollierung die Zeile, in der ein Symbol oder mehrere gelöscht wurden, zunächst ohne die gelöschten Symbole mit je einem Freiplatz an der Stelle, an der gelöscht wurde, erscheint.

8. Verfahren nach einem der vorhergehenden Ansprüche,
**dadurch gekennzeichnet, dass**, wenn nur eine Zeile aufgezeigt wird, kein Ereignis vorliegt und im Hintergrund keine Zeile mit einer Eintragung vorhanden ist, in der aufgezeigten Zeile nach Ablauf der Rollierzeit die Symbole linksbündig aufgeschlossen werden.

9. Verfahren nach einem der vorhergehenden Ansprüche,
**dadurch gekennzeichnet, dass**, wenn die Symbolanzahl von einer oder mehreren Zeilen, bei denen die Symbolanzahl maximal die einer einzelnen Zeile ist, die Symbole der Symbolzeilen zusammengefasst werden, wobei von der nächsten im Hintergrund wartenden Zeile die Vormerkung einer Zusammenfassung ausgeht.

10. Verfahren nach Anspruch 8,
**dadurch gekennzeichnet, dass** Lücken in der ersten Zeile erst dann benutzt werden, wenn diese während mindestens einer Rollierzeit aufgezeigt waren.

11. Verfahren nach Anspruch 8,
**dadurch gekennzeichnet, dass** die Zeile mit mehr Symbolen mit der Zeile gefüllt wird, in der weniger Symbole eingetragen sind, und im Falle, dass beide Zeilen jeweils die gleiche Anzahl von Symbolen haben, die Zeile aufgefüllt wird, die als zeitlich nächste Zeile zum Aufzeigen eingeordnet wird.

12. Verfahren nach den Ansprüchen 8 bis 10,
**dadurch gekennzeichnet, dass** beim Zusammenfassen das Auffüllen der Zeile stellenorientiert ist, wobei die dem jeweiligen Symbol zugeordnete Stelle innerhalb einer Zeile auch in der anderen Zeile zugewiesen wird.

13. Verfahren nach einem der vorhergehenden Ansprüche,
**dadurch gekennzeichnet, dass** wenn die erste Zeile belegt ist und für die zweite Zeile mehrere Ereignisse vorliegen, die aufgezeigte erste Zeile aufgezeigt bleibt, während das Rollieren der Anzeige in der zweite Zeile fortgesetzt wird und umgekehrt.

14. Verfahren nach Anspruch 1,
**dadurch gekennzeichnet, dass** die Rollierzeit der Aufzeige in der zweiten Zeile länger ist als die Rollierzeit in der ersten Zeile.

15. Verfahren nach Anspruch 1,
**dadurch gekennzeichnet, dass** dann, wenn in der zweiten Zeile ein Symbol mit Hinweis durch ein Ereignis erfolgt und die Rollierzeit in der zweiten Zeile noch nicht beendet ist, die Aufzeigedauer in der ersten Zeile soweit verlängert wird, bis die Rollierzeit in der zweiten Zeile abgelaufen ist und dann gleichzeitig der Wechsel in beiden Zeilen erfolgt.

16. Verfahren nach Anspruch 1,
**dadurch gekennzeichnet, dass** dann, wenn in der ersten Zeile die Aufzeigedauer durch ein Ereignis oder mehrere Ereignisse verändert wird, die Aufzeigedauer der zweiten Zeile soweit verändert wird, bis nach dem letzten Ereignis in der ersten Zeile deren Rollierzeit abgelaufen ist und dann gleichzeitig der Wechsel in beiden Zeilen erfolgt.

17. Verfahren nach einem der vorhergehenden Ansprüche,
**dadurch gekennzeichnet, dass** dann, wenn die erste Zeile belegt und aufgezeigt ist und in der zweiten Zeile nur ein Symbol mit Hinweis in Schriftform aufgezeigt wird, beide Zeilen unverändert aufgezeigt bleiben.

## Claims

1. Procedure for indicating occurrences in a motor vehicle by means of symbols in a defined area of a display with a number of possible symbols which is larger than the number of positions provided in the defined area of the display in which a visual indication of several symbols is provided in a first line and non-visible further first lines of symbols can be brought into a waiting position in the background, in a computer and in the defined area of the display and can be automatically indicated in the first line at a certain interval relative to one another within a rolling period and a symbol and a note in letters are automatically indicated in a second line in the display, whereby a variety of symbols and the associated notes are provided and also stored in the background and in the event of one or several occurrences a symbol with a note will be immediately indicated and a further symbol with a note in letters will be indicated within a rolling period and whereby the indicating times of the two lines are adapted to each other.

2. Procedure according to Claim 1, **characterised in that** if the positions in the first line are not completely occupied by indicated symbols one or several new symbols will be added insofar as positions are still available in the visible line.

3. Procedure according to the Claims 1 and 2, **characterised in that** if one or several symbols must be indicated in the first line and the first line is occupied, the next waiting line in the background will be visibly placed in the foreground and at the same time one or several symbols will indicated, the indicating of symbols starting from the left, or, if at least one symbol is entered, further symbols to be indicated will be added to the line and indicated.

4. Procedure according to one of the foregoing Claims, **characterised in that** the counting of the rolling time for the first line will start anew if a symbol newly appears or is newly deleted.

5. Procedure according to one of the foregoing Claims, **characterised in that** if a symbol is inserted it will first appear inverse-coloured or the background of the display and/or the symbol will appear in a colour different from the standard colour and/or the symbol and/or the background of the display will be shown with a different pattern.

6. Procedure according to one of the foregoing Claims, **characterised in that** if a symbol is deleted a deletion mark will be indicated at this symbol.

7. Procedure according to one of the foregoing Claims, **characterised in that** during the rolling the line in which one or several symbols were deleted first appears without the deleted symbols but with a free position where each deletion was carried out.

8. Procedure according to one of the foregoing Claims, **characterised in that** if only one line is indicated, no occurrence is present and, in the background, there is no line with an entry, the symbols in the line indicated will be left-justified after the rolling time has elapsed.

9. Procedure according to one of the foregoing Claims, **characterised in that** if the number of symbols of one or several lines in which the number of symbols is at most that of a single line, the symbols of the symbol lines will be combined, the next line waiting in the background effecting the notification of a combination.

10. Procedure according to Claim 8, **characterised in that** gaps in the first line will be used only if these have been indicated during at least one rolling period.

11. Procedure according to Claim 8, **characterised in that** the line with more symbols is filled with symbols from the line in which fewer symbols are entered and that if both lines have the same number of symbols that line will be filled which is arranged as the next in time to be indicated.

12. Procedure according to the Claims 8 to 10, **characterised in that**, during combining, the filling of the line is position-oriented, whereby the position allocated to the respective symbol within one line is also allocated to said symbol in another line.

13. Procedure according to one of the foregoing Claims, **characterised in that** if the first line is occupied and there are several occurrences for the second line the indicated first line will remain indicated while the rolling of the display in the second line will be continued and vice versa.

14. Procedure according to Claim 1, **characterised in that** the rolling time of the display in the second line is longer than the rolling time in the first line.

15. Procedure according to Claim 1, **characterised in that** if in the second line a symbol with note appears because of an occurrence and the rolling time in the second line has not yet elapsed, the indicating period in the first line will be extended until the rolling time in the second line has elapsed and the change will then be made in both lines simultaneously.

16. Procedure according to Claim 1, **characterised in that** if in the first line the indicating period is changed because of one or several occurrences the indicating period of the second line will be changed until the rolling time in the first line has elapsed after the last occurrence and the change will then be made in both lines simultaneously.

17. Procedure according to one of the foregoing Claims, **characterised in that** if the first line is occupied and indicated and in the second line only one symbol with a note in letters is indicated, both lines will remain indicated unchanged.

## Revendications

1. Procédé pour afficher des événements dans un véhicule à moteur au moyen de symboles sur une surface délimitée d'un écran d'affichage avec un nombre plus important de symboles possibles que les emplacements existants sur la surface délimitée de l'écran d'affichage, sur lequel un affichage visible de plusieurs symboles est prévu sur une première ligne et, en arrière-plan, des premières lignes supplémentaires de symboles sont mises en état d'attente dans un ordinateur et de manière invisible sur la surface délimitée de l'écran, ces symboles étant affichables automatiquement sur la première ligne dans un espace temporel les uns par rapport aux autres selon un temps de roulement et, sur une deuxième ligne sur l'écran d'affichage, un symbole et une indication en lettre sont affichés automatiquement, auquel cas un grand nombre de symboles et leur indication sont prévus et mémorisés également en arrière-plan et, en cas d'un ou de plusieurs événements, un symbole avec une indication est immédiatement affiché et, dans un temps de roulement, un autre symbole avec, à chaque fois, une indication est affiché en lettre et auquel cas les temps d'affichage des deux premières lignes sont adaptés l'un par rapport à l'autre.

2. Procédé selon la revendication 1, **caractérisé par le fait que**, lorsque la première ligne n'est pas intégralement occupée par des symboles affichés à leurs emplacements, un ou plusieurs nouveaux symboles est/sont ajouté(s) sur la ligne tant qu'il y a de la place sur la ligne visible.

3. Procédé selon les revendications 1 et 2, **caractérisé par le fait que**, lorsqu'un ou plusieurs symboles doit/doivent être affiché(s) sur la première ligne et que la première ligne est occupée, la ligne suivante en attente en arrière-plan est affichée au premier plan et, simultanément, un ou plusieurs symboles sont affichés en partant de la gauche, ou lorsqu'un symbole au minimum est inscrit, d'autres symboles en attente à afficher sont ajoutés et affichés.

4. Procédé selon une des revendications mentionnées précédemment, **caractérisé par le fait que** le comptage du temps de roulement de la première ligne repart à zéro lorsqu'un symbole apparaît ou est effacé.

5. Procédé selon une des revendications mentionnées précédemment, **caractérisé par le fait que**, lors de l'affichage d'un symbole, le symbole apparaît tout d'abord dans la couleur inverse ou l'arrière-plan du symbole et/ou le symbole apparaissent dans une couleur différente du ton standard, et/ou le symbole et/ou l'arrière-plan du symbole sont représentés avec un motif modifié.

6. Procédé selon une des revendications mentionnées précédemment, **caractérisé par le fait que**, lorsqu'un symbole est effacé, une marque d'effacement s'affiche sur le symbole.

7. Procédé selon une des revendications mentionnées précédemment, **caractérisé par le fait que**, lors du roulement, la ligne sur laquelle un ou plusieurs symboles ont été effacés apparaît tout d'abord sans les symboles effacés à chaque fois avec un emplacement libre là où le symbole a été effacé.

8. Procédé selon une des revendications mentionnées précédemment, **caractérisé par le fait que**, lorsque une seule ligne est affichée, qu'aucun événement ne survient et qu'en arrière-plan, aucune première ligne avec une indication n'existe, les symboles sont regroupés de manière alignée à gauche sur la première ligne affichée après l'écoulement du temps de roulement.

9. Procédé selon une des revendications mentionnées précédemment, **caractérisé par le fait que**, lorsque le nombre de symboles d'une ou de plusieurs premières lignes correspond au maximum à celui d'une seule ligne, les symboles des lignes seront combinés, auquel cas la notification d'un regroupement se termine à partir de la ligne suivante en attente en arrière-plan.

10. Procédé selon la revendication 8, **caractérisé par le fait que** les emplacements vides sur la première ligne sont ensuite utilisés seulement lorsque celle-ci était affichée au minimum pendant un temps de roulement.

11. Procédé selon la revendication 8, **caractérisé par le fait que** la ligne avec davantage de symboles est remplie par la ligne qui a inscrit moins de symboles et dans le cas où les deux lignes possèdent chacune le même nombre de symboles, c'est la ligne qui est positionnée temporellement comme ligne suivante à afficher qui est remplie.

12. Procédé selon les revendications 8 à 10, **caractérisé par le fait que**, lors du regroupement, le remplissage est orienté selon l'emplacement, auquel cas l'emplacement attribué à chaque symbole au sein d'une ligne est également attribué sur une autre ligne.

13. Procédé selon une des revendications mentionnées précédemment, **caractérisé par le fait que**, lorsque la première ligne est occupée et que plusieurs événements sont existants sur la deuxième ligne, la première ligne affichée reste affichée tandis que le roulement de l'affichage sur la deuxième ligne continue et inversement.

14. Procédé selon la revendication 1, **caractérisé par le fait que** le temps de roulement sur la deuxième ligne est plus long que le temps de roulement sur la première ligne.

15. Procédé selon la revendication 1, **caractérisé par le fait qu'**ensuite, lorsque, sur la deuxième ligne, un symbole avec indication apparaît à la suite d'un événement et que le temps de roulement sur la deuxième ligne n'est pas encore écoulé, la durée d'affichage sur la première ligne sera prolongée jusqu'à ce que le temps de roulement sur la deuxième ligne soit écoulé et qu'ensuite simultanément, le changement sur les deux lignes ait lieu.

16. Procédé selon la revendication 1, **caractérisé par le fait que**, lorsque, sur la première ligne, la durée d'affichage est modifiée par un ou plusieurs événements, la durée d'affichage de la deuxième ligne est modifiée jusqu'à ce qu'après le dernier événement sur la première ligne, leur temps de roulement se soit écoulé et qu'ensuite simultanément, le changement sur les deux lignes ait lieu.

17. Procédé selon une des revendications mentionnées précédemment, **caractérisé par le fait que**, lorsque la première ligne est occupée et affichée et que, sur la deuxième ligne, seul un symbole avec indication est affiché en lettre, les deux lignes restent affichées de manière inchangée.
